# EUROPÄISCHE PATENTANMELDUNG

(11) **EP 1 121 883 A1**
(43) Veröffentlichungstag der Anmeldung: **08.08.2001**
(21) Anmeldenummer: 00128233.4
(22) Anmeldetag: 27.12.2000
(51) Int. Cl.: A47J 37/06, A47J 36/12, E05F 1/12

(54) **Drehvorrichtung mit Feder**

(30) Priorität: 04.02.2000 DE 10005002
(71) Anmelder: Juno Grossküchen GmbH, 35745 Herborn-Burg (DE)
(72) Erfinder: Piccoli, Primo L., 35578 Wetzlar (DE); Vorschulze, Klaus, 35745 Herborn (DE); Bangard, Claus, 35080 Bad Endbach (DE)
(74) Vertreter: Baumgartl, Gerhard Willi

(57) **Zusammenfassung**

Die Drehvorrichtung zum Drehen eines Drehkörpers (51,6) um eine Drehachse (A) umfasst
a) eine Trägereinrichtung (3) in der der Drehkörper drehbar gelagert ist,
b) wenigstens eine zylindrische Schraubenfeder (80), die an einem ersten Ende (82) mit dem Drehkörper gekoppelt ist und an einem zweiten Ende (81) mit der Trägereinrichtung gekoppelt ist und die bei einer Drehung der beiden Enden relativ zueinander in einer Drehrichtung um die Drehachse ein Drehmoment auf den Drehkörper ausübt.

Vorteile: passive Kompensation des Gewichts von drehbaren Komponenten, insbesondere von Deckeln von Behältern wie Gargutbehältern von Garsystemen

## Beschreibung

Die Erfindung betrifft eine Drehvorrichtung.

In gewerblichen Küchen sind Garsysteme bekannt mit einer tisch- oder thekenförmigen Trägereinrichtung und mit einer oder mehreren auf der Trägereinrichtung in einem modularen Aufbau montierten, elektrisch oder mit Gas beheizten Gareinrichtungen,. beispielsweise Gartiegeln oder Garpfannen, zum Garen von größeren Mengen von Speisen (*Prospekt "Creative System Counter Therma Grossküchen*" *der Electrolux Therma GmbH*). Die Gartiegel sind mit einem Deckel verschließbar, der über eine Drehvorrichtung mit Drehlagern um eine Drehachse drehbar ist. Zur teilweisen Kompensation des Gewichts des Deckels werden hebelartig wirkende Federsysteme eingesetzt.

Der Erfindung liegt nun die Aufgabe zugrunde, eine Drehvorrichtung zum Drehen eines Drehkörpers anzugeben, bei der in einfacher Weise ein Drehmoment auf den Drehkörper ausgeübt werden kann.

Diese Aufgabe wird gemäß der Erfindung gelöst mit den Merkmalen des Anspruchs 1.

Die Drehvorrichtung zum Drehen eines Drehkörpers um eine Drehachse umfasst
a) eine Trägereinrichtung, in der der Drehkörper drehbar gelagert ist,
b) wenigstens eine Feder, deren eines Ende mit dem Drehkörper gekoppelt ist und deren anderes Ende mit der Trägereinrichtung gekoppelt ist und die bei einer Drehung der beiden Enden relativ zueinander in einer Drehrichtung um die Drehachse ein Drehmoment auf den Drehkörper ausübt.

Das mit dem Drehkörper gekoppelte Ende der Feder dreht sich bei einer Drehung um die Drehachse mit, während das andere, mit der Trägereinrichtung gekoppelte Ende sich nicht mitdreht, also ortsfest bleibt. Bei einer Drehung der beiden Enden relativ zueinander in einer Drehrichtung wird nun durch in Umfangsrichtung wirkende elastische Rückstellkräfte in der Feder ein Drehmoment ausgeübt. Solche Eigenschaften aufweisende Federn sind insbesondere zylindrische Schraubenfedern (helikale Torsionsfedern), Spiralfedern (spiralige Torsionsfedern) oder stabförmige Torsionsfedern. Die in der Feder wirkenden Rückstellkräfte werden praktisch vollständig, abgesehen von den im allgemeinen vernachlässigbaren Dissipationsverlusten, in ein für die Drehung nutzbares Drehmoment umgewandelt und bewirken, anders als beim Stand der Technik, keine unerwünschten Reaktionskräfte durch Hebelwirkung auf andere Teile der Trägereinrichtung. Die Ausübung des Drehmomentes durch die Feder ist rein passiv, so dass keine Fremdenergie erforderlich ist. Man kann die in der gemäß der Erfindung eingesetzten Art und Weise eingesetzte Feder auch als Drehmomentfeder bezeichnen.

Vorteilhafte Ausgestaltungen und Weiterbildungen der Drehvorrichtung gemäß der Erfindung sind in den vom Anspruch 1 abhängigen Ansprüchen angegeben.

Durch die Federkennlinie der Feder und ihren Drehsinn können nun unterschiedliche Charakteristiken des Einflusses der Feder auf die Drehbewegung des Drehkörpers eingestellt werden.

Wenn in einer Ausführungsform auf den drehbar gelagerten Drehkörper durch die Schwerkraft (Erdanziehungskraft, Gravitationskraft) ein Drehmoment bewirkt wird, was insbesondere bei einer gegen die Schwerkraftrichtung geneigten, beispielsweise senkrecht zur Schwerkraft gerichteten (horizontalen), Drehachse der Fall ist, so wirkt das von der Feder ausgeübte Drehmoment, im folgenden auch als Federdrehmoment bezeichnet, vorzugsweise, als Gegendrehmoment, entgegengesetzt dem von der Gravitationskraft bewirkten Drehmoment, das im folgenden auch als Gravitationsdrehmoment bezeichnet wird und für nicht zu große Höhenunterschiede als konstant angesehen werden kann.

In einer vorteilhaften Ausführungsform ist das Federdrehmoment der Feder im Drehwinkelbereich immer betragsmäßig kleiner als das Gravitationsdrehmoment, wird dieses also nur verringern, aber nicht ganz kompensieren. Die Differenz aus Gravitationsdrehmoment und Federdrehmoment, die auch als effektives Drehmoment bezeichnet werden kann, ist dann immer positiv (größer Null). Die Feder erleichtert in diesem Fall die Handhabung beim Kippen oder Drehen schwerer Teile, also Drehkörpern mit hohem Eigengewicht und führt dadurch zu einer ergonomischen Verbesserung. Der Drehkörper wird aber nicht durch die Feder daran gehindert, aufgrund seines Gewichts nach unten zu kippen oder zu drehen, und verharrt durch das positive effektive Drehmoment auch in der untersten Position. Dies ist besonders in Anwendungen von Vorteil, bei denen der Drehkörper in der untersten Position verharren soll wie beispielsweise bei drehbaren Dekkeln zum Verschließen oder Abdecken von Behältern, die in der untersten Position sicher anliegen oder abschließen sollen.

Im allgemeinen umfasst die Drehvorrichtung ein oder mehrere Drehlager zur drehbaren Lagerung des Drehkörpers an oder in der Trägereinrichtung. Wenigstens ein Drehlager weist nun eine Ausgangsposition und eine Endposition für die Drehung auf, die damit auch die Drehbewegung des drehbaren Körpers begrenzen. Die beiden Grenzpositionen der Drehbewegung werden vorzugsweise durch zusammenwirkende Anschlagsmittel, beispielsweise ineinander verlaufende Ringsegmentführung und ein zugeordneter in Umfangsrichtung kürzerer Ringsegmentvorsprung, festgelegt.

Die Endposition des Drehlagers kann insbesondere der, in Richtung der Gravitationskraft gesehen, tiefsten Position des Drehkörpers entsprechen.

Das Federdrehmoment wird vorzugsweise von einem voreingestellten oder einstellbaren Ausgangsdrehmoment (Off-set-Moment mit Betrag größer oder gleich Null) bei der Ausgangsposition des Drehlagers bis auf einen Endwert bei der Endposition des Drehlagers betragsmäßig (monoton) zunehmen, ist also bei der Endposition des Drehlagers maximal.

In einer vorteilhaften Ausführungsform sind die beiden Enden der Feder bei einer festen Position, insbesondere der Ausgangsposition, des Drehlagers in wenigstens zwei verschiedene Drehpositionen relativ zueinander einstellbar sind. Dadurch kann zweckmäßig das Ausgangsdrehmoment der Feder (und damit auch die anderen Drehmomentwerte) eingestellt werden, indem die Enden relativ zueinander vedreht werden und damit die Feder stärker oder weniger stark vorgespannt (belastet) wird. Es kann damit auch bei mit der Zeit nachlassender Federkraft der Feder ein gewünschtes Ausgangsdrehmoment wiederhergestellt werden, indem ein verstellbares Ende der Feder in eine andere Winkelposition gebracht wird und dadurch die Feder stärker vorgespannt wird. Für diese Verstellung der Winkelposition können in einer Variante für zumindest ein Ende der Feder mehrere in Umfangsrichtung um die Drehachse des Drehlagers verteilte Aufnahmen zum Aufnehmen dieses Endes der Feder vorgesehen sein oder in einer anderen Variante eine in mehreren Winkelpositionen einstellbare Aufnahme, die insbesondere an einem Aufnahmeteil vorgesehen ist, das mehrere in Umfangsrichtung verteilte Feststellmittel, insbesondere Gewinde, aufweist, in die ein Feststellelement in Eingriff bringbar, insbesondere eine Feststellschraube eindrehbar, ist. Das Aufnahmeteil kann über einen Verstellbolzen mit einem zugehörigen Werkzeug verdreht werden, beispielsweise einen Sechskant-Verstellbolzen.

Ferner kann wenigstens eines der Aufnahmeteil einen im Wesentlichen parallel zur Drehachse gerichteten Trägerbolzen aufweisen, auf dem die Feder gelagert ist.

Das Drehlager weist in einer bevorzugten Ausführungsform ein in der Trägereinrichtung befestigtes, hohlzylindrisches erstes Drehlagerteil und ein im Drehkörper befestigtes, hohlzylindrisches zweites Drehlagerteil auf. Eine zylindrischen Innenfläche des ersten Drehlagerteils gleitet dann auf der zylindrischen Außenfläche des zweiten Drehlagerteils oder umgekehrt. Die Feder kann nun in platzsparender Weise durch den Innenraum der beiden Drehlagerteile geführt sein. Eine Mittelachse der Feder fällt im allgemeinen im Wesentlichen mit der Drehachse des Drehlagers zusammen.

Die genannten Komponenten der Drehvorrichtung können wenigstens teilweise innerhalb eines oder mehrerer Rohre, insbesondere rotationssymmetrischer Rundrohre, der Trägereinrichtung bzw. des Drehkörpers angeordnet sein.

Die Drehvorrichtung kann auch einen motorischen Antrieb zum Drehen des Drehkörpers umfassen.

Die Erfindung wird im Folgenden anhand von Ausführungsbeispielen unter Bezugnahme auf die Zeichnung weiter erläutert. Es zeigen jeweils in einer schematischen Darstellung:
- FIG 1: einen Teil eine Drehvorrichtung mit einem Drehlager und einer Feder in einer geschnittenen Frontansicht,
- FIG 2: ein Teil eines Drehlagers in einer Frontansicht,
- FIG 3: das Drehlager gemäß FIG 2 in einer Seitenansicht,
- FIG 4: ein zu dem Teil gemäß den FIG 2 und 3 des Drehlagers korrespondierendes zweites Teil des Drehlagers in einer Frontansicht,
- FIG 5: das Drehlagerteil gemäß FIG 4 in einer Seitenansicht,
- FIG 6: ein Aufnahmeteil für eine Feder mit einer Vorspanneinrichtung in einer Frontansicht,
- FIG 7: das Aufnahmeteil gemäß FIG 6 in einer Seitenansicht,
- FIG 8: ein zweites Aufnahmeteil für die Feder in einer Frontansicht,
- FIG 9: das Aufnahmeteil gemäß FIG 8 in einer Seitenansicht und
- FIG 10: ein Garsystem mit einem drehbaren Verschlußdeckel für einen Gargutbehälter in einer perspektivischen Explosionsdarstellung.
Einander entsprechende Teile sind in den FIG 1 bis 10 mit denselben Bezugszeichen versehen.

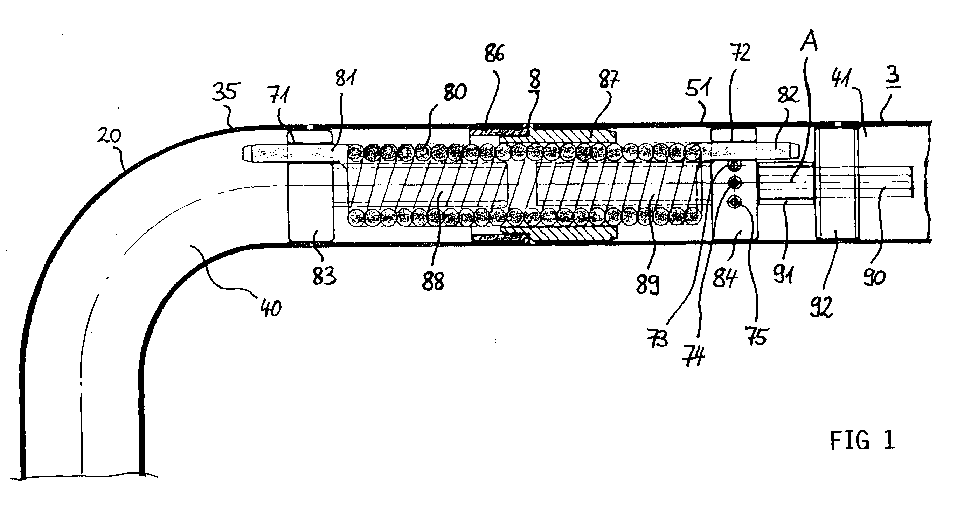

FIG 1 zeigt eine Drehvorrichtung zur Drehbewegung eines Drehrohrs 51 - als drehbarer Körper - relativ zu einem Trägerrohr 35 um eine Drehachse A. Die Drehbewegung ist in einem Drehlager 8 geführt. Das Drehlager 8 weist ein in den Rohrinnenraum 40 des Trägerrohrs 35 eingeführtes und dort befestigtes, hohlzylindrisches (buchsen- oder hülsenförmiges) erstes Drehlagerteil 86, das mit einem stirnseitigen Flansch an der Stirnseite des Rohrendes des Trägerrohres 35 anschlägt, sowie ein im Rohrinnenraum 41 des Drehrohres 51 angeordnetes und dort befestigtes, ebenfalls hohlzylindrisch ausgebildetes zweites Drehlagerteil 87 auf. Das zweite Drehlagerteil 87 gleitet mit einer zylindrischen Außenfläche in der zylindrischen Innenfläche des ersten Drehlagerteils 86.

Durch den Innenraum der beiden Drehlagerteile 86 und 87 ist nun eine Feder 80 geführt, die als zylindrische. Schraubenfeder, vorzugsweise aus einem gebogenen Runddraht, gebildet ist. Die Feder 80 kann beispielsweise eine Feder nach DIN 17224 sein. Parallel zur Längsachse der Feder 80 stehen an beiden Seiten jeweils ein stabförmiges oder bolzenförmiges Ende 81 und 82 ab. Die Mittelachse (Zylinderlängsachse) der Feder 80 fällt mit der Drehachse A zusammen.

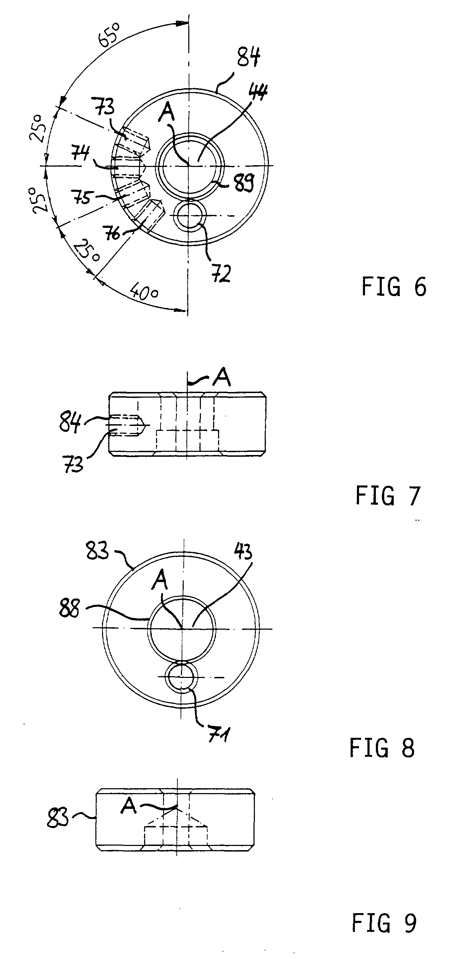

Das erste Ende 81 der Feder 80 ist durch eine Aufnahme 71 geführt, die als zylindrische Bohrung in einem zylindrischen oder ringförmigen Aufnahmeteil 83 ausgebildet ist. Dieses erste Aufnahmeteil 83 ist ortsfest im Trägerrohr 35 befestigt. Mit dem ersten Aufnahmeteil 83 verbunden oder an diesem ausgeformt ist ein hohlzylindrischer (oder auch massiver) Bolzen 88, auf dem die Feder 80 aufgesteckt und geführt gehalten ist. Das in den FIG 8 und 9 in zwei verschiedenen Ansichten gezeigte erste Aufnahmeteil 83 kann über eine Schraubverbindung oder eine andere lösbare Verbindung oder auch über eine unlösbare Verbindung, beispielsweise über eine Verschweißung, mit der Rohrwandung des Trägerrohres 35 verbunden sein.

Auf der anderen Seite ist im Drehrohr 51 ein zweites Aufnahmeteil 84 befestigt, das eine Aufnahme 72 für das zweite Ende 82 der Feder 80 aufweist. Das zweite Aufnahmeteil 84 ist in den FIG 6 und 7 in verschiedenen Ansichten dargestellt und ist vorzugsweise über eine Schraubverbindung mit der Rohrwandung des Drehrohres 51 verbunden. Dazu weist das zweite Aufnahmeteil 84 eines oder vorzugsweise, wie dargestellt, mehrere, über seine Umfangsrichtung verteilt angeordnete Innengewinde 73 bis 76 auf, in denen jeweils von außen durch die Rohrwandung des Drehrohres 51 eine Feststellschraube 77 eingeschraubt werden kann. Die Innengewinde 73 bis 76 in dem zweiten Aufnahmeteil 84 sind vorzugsweise um einen konstanten Winkel zueinander versetzt angeordnet, beispielsweise wie in FIG 6 dargestellt jeweils um einen Winkel von 25 Grad (Winkelgrad). Der Winkel zwischen der Mittelachse des Innengewindes 73 und der durch den Innenraum 44 des Aufnahmeteils 84 und die Aufnahme 72 verlaufenden Mittelachse beträgt 65 Grad, während der Winkel zwischen der Mittelachse des Innengewindes 76 und der genannten Mittelachse des Innenraums 44 und der Aufnahme 72 40 Grad beträgt. Da das erste Ende 81 der Feder 80 in dem Aufnahmeteil 83 ortsfest verankert ist, kann durch Feststellen des Aufnahmeteils 84 in einer der durch die Innengewinde 73 bis 76 festgelegten Winkelpositionen jeweils eine unterschiedliche Vorspannung der Feder 80 eingestellt werden. Damit kann auch ein durch Nachgeben im Material nach einer bestimmten Zeit verlorenes Rückstellmoment der Feder 80 kompensiert werden, indem die Vorspannung der Feder 80 durch ein Weiterdrehen des Aufnahmeteils 84 mit dem eingeführten Ende 82 der Feder 80 erhöht wird.

Zum Verdrehen des zweiten Aufnahmeteils 84 ist an dem zweiten Aufnahmeteil 84 an der von der Feder 80 abgewandten Seite ein, vorzugsweise mit einem polygonalen Querschnitt, insbesondere einem Sechskantprofil, versehener Bolzen (Stift) 90 vorgesehen (ausgebildet oder befestigt). Dieser Bolzen 90 ist durch ein Befestigungsteil 92 geführt und gehaltert, das im Rohrinnenraum 41 des Drehrohrs 51 befestigt ist. Mittels eines Rohrschlüssels oder eines Knarren/Nuss-Werkzeuges ist es nun möglich, den Bolzens 90 und damit das zweite Aufnahmeteil 84 zu verdrehen und damit die Feder 80 zu spannen. An der gegenüberliegenden Seite weist das Aufnahmeteil 84 einen hohlzylindrischen Bolzen 89 auf, auf dem die Feder 80 an ihrem vom Aufnahmeteil 83 abgewandten Seite geführt und aufgesteckt ist.

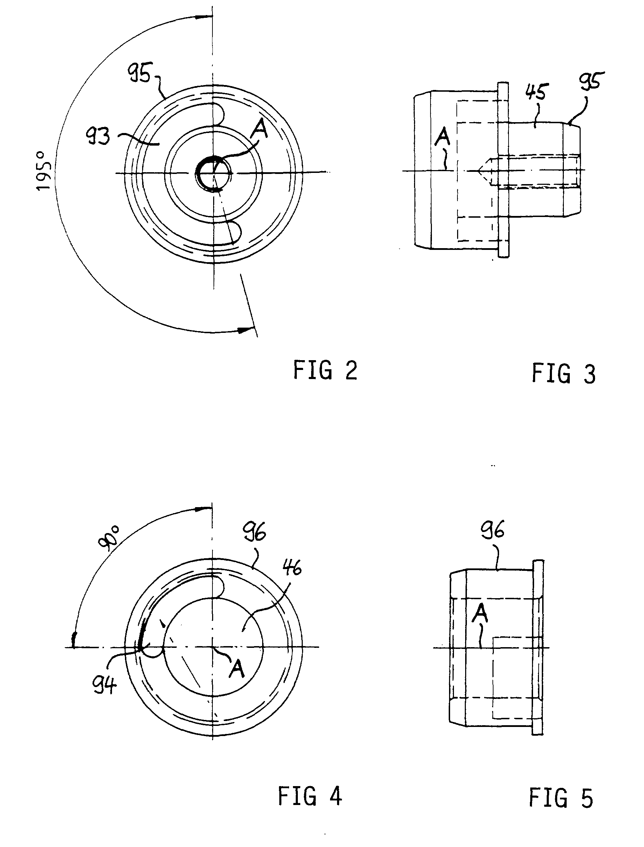

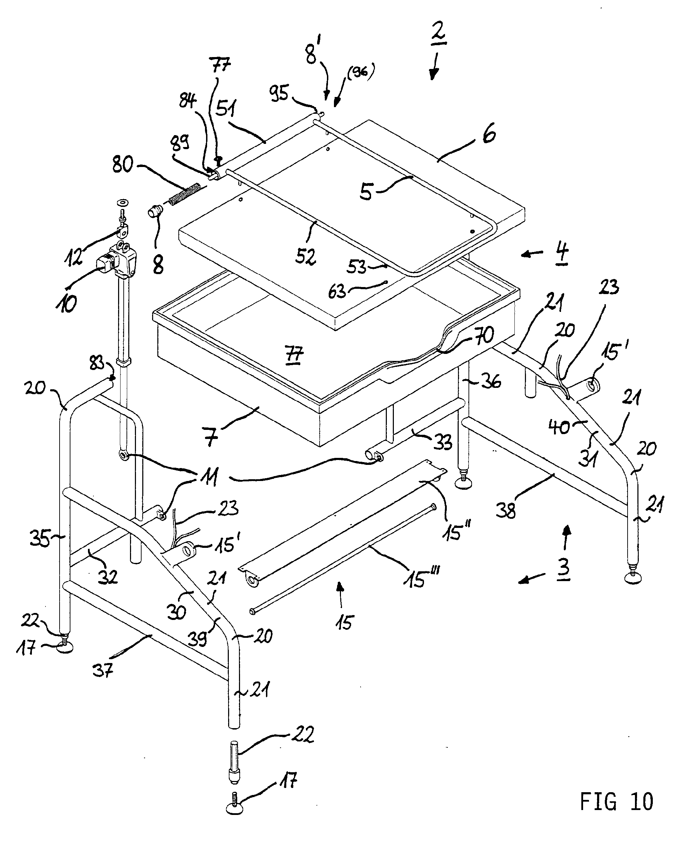

Auf der vom Drehlager 8 gegenüberliegenden Seite des Drehrohrs 51 ist das weitere Drehlager 8' angeordnet (nur in FIG 10 dargestellt), das ein erstes Drehlagerteil 95, das in dem Drehrohr 51 untergebracht wird, und ein korrespondierendes zweites Drehlagerteil 96, das im Trägerrohr 36 des Rohrmoduls 31 untergebracht wird, umfasst. Die beiden Drehlagerteile 95 und 96 sind in den FIG 2 und 3 bzw. 4 und 5 detaillierter dargestellt. Beide Drehlagerteile 95 und 96 umfassen jeweils einen hohlzylindrischen Teil, der an den Rohrinnendurchmesser des jeweiligen Rohres 51 bzw. 36 angepasst ist, und jeweils einen Flansch, der an der zugehörigen Rohrstirnseite anschlägt. Das Drehlagerteil 95 weist ferner einen Rohrstutzen 45 geringeren Durchmessers auf, der in eine entsprechende Öffnung 46 im Drehlagerteil 96 einsteckbar ist.

Schließlich weist das Drehlagerteil 95 eine in Umfangsrichtung verlaufende Ringnut 93 auf, die sich über einen Winkel von 195 Grad erstreckt. Das Drehlagerteil 96 weist einen entsprechenden ringsegmentartigen Fortsatz 94 auf, der sich über einen Winkel von 90 Grad in Umfangsrichtung erstreckt und in die Ringnut 93 des Drehlagerteils 95 in Eingriff bringbar ist. Die Drehlagerteile 95 und 96 sind somit um einen resultierenden Winkel von 105 Grad gegeneinander drehbar, wobei die Endpositionen durch das Anschlagen der jeweiligen Enden von Ringnut 93 und Fortsatz 94 aneinander festgelegt sind. Die Ringnut 93 und der Fortsatz 94 bilden somit Anschlagsmittel für die Drehbewegung. Da das Drehlagerteil 95 fest mit dem Drehrohr 51 und das Drehlagerteil 96 fest mit dem Trägerrohr 36 verbunden sind, kann das Drehrohr 51 oder ein mit dem Drehrohr 51 verbundener zu drehender oder zu schwenkender Körper somit in einem Winkelbereich von 105 Grad geschwenkt werden. Dies ist besonders dann von Vorteil beim Schwenken aus einer senkrecht zur Schwerkraft gerichteten Horizontalen, die eine Endposition der Anschlagsmittel (93 und 94) bildet, in eine über die Senkrechte hinaus liegende Winkelposition von 105 Grad, bei der wiederum der Fortsatz 94 an der anderen Begrenzungsseite der Ringnut 93 anschlägt. Der nach oben geschwenkte (gedrehte) Körper ist dann sicher gehalten und kann nicht nach vorne herunterfallen. Ein Beispiel für einen solchen nach oben schwenkbaren Körper ist ein in FIG 10 mit 6 bezeichneter Deckel für einen Gartiegel 7, worauf noch detaillierter eingegangen wird.

Das durch die Federkraft der Feder 80 in der nach oben gerichteten Drehrichtung ausgeübte Drehmoment nimmt vorzugsweise von der Endposition (Ausgangsposition beim Winkel 0 Grad) des Drehlagers 8', die der horizontalen Lage des schwenkbaren Körpers entspricht, also in FIG 10 der Lage, bei der der Deckel 6 auf dem Gartiegel 7 aufliegt, zu einer oberen Endposition (beim Winkel 105 Grad) kontinuierlich ab. In der Ausgangsposition kann das Ausgangsdrehmoment Null sein oder einem voreingestellten Wert entsprechen. Dieser Wert des Ausgangsdrehmoments kann über die Einstellschraube 77 und die entsprechenden Gewinde 73 bis 76 eingestellt werden.

Die Feder 80 kompensiert somit einen Teil des Gewichts des schwenkbaren Körpers, so dass sich dieser leichter anheben lässt, ist aber so schwach, dass der Körper in der Ausgangsposition auf dem Gartiegel 7 ruht. Die Feder 80 übt dabei praktisch ausschließlich ein Drehmoment über die Drehachse A und nicht auf andere Teile des Garsystems aus, so dass keine Gegenmaßnahmen wie z.B. Versteifungen zum Auffangen der unerwünschten Reaktionskräfte (Gegenkräfte) mehr erforderlich sind.

FIG 10 zeigt eine Ausführungsform eines Garsystems, das für den Einsatz in einer Großküche (gewerblichen Küche, Gastronomie) bestimmt ist. Das Garsystem 2 umfasst eine Gareinrichtung 4 und eine Trägereinrichtung 3 für die Gareinrichtung 4. Die Gareinrichtung 4 umfasst einen Gartiegel (Gargutbehälter, Bratpfanne) 7, der wie dargestellt beispielsweise quaderförmig ausgebildet sein kann, und einen Deckel 6, der dem oberen Rand des Gartiegels 7 angepasst ist, zum Verschließen und Abdecken des Gartiegels 7.

Unter dem Boden 77 des Gartiegels 7 sind eine oder mehrere - nicht dargestellte - Heizeinrichtungen angeordnet, die eine oder mehrere Heizzonen zum Beheizen von in den Gartiegel 7 einbringbarem Gargut definieren. Zum Bedienen und Ansteuern der Heizeinrichtungen im bzw. am Gartiegel 7 ist eine Steuereinrichtung 9 unterhalb des Gartiegels 7 vorgesehen mit zwei Stellelementen 40 und 41 sowie jeweils zwei den Stellelementen 40 und 41 zugeordneten Anzeigeelementen (Kontroll-Leuchten) 43 zum Ansteuern von zwei Heizzonen im Gartiegel 7, beispielsweise durch Einstellen einer Solltemperatur für eine Regelung der Gartemperatur durch Ansteuern der entsprechenden Heizeinrichtungen.

Der Gartiegel 7 ist über ein Drehlager 15 an der Trägereinrichtung 3 und über ein weiteres Drehlager 12 an einem Hubzylinder 10 gelagert und gesichert. Der Hubzylinder 10 ist an dem vom Drehlager 12 abgewandten Ende in einem weiteren Drehlager 11 an zwei Lagerrohren 13 und 14 der Trägereinrichtung 3 gelagert. Der Gartiegel 7 ist über den Hubzylinder 10 als Antrieb nach vorne um das Drehlager 15, insbesondere nach Betätigung eines entsprechenden, nicht gezeigten Bedienelements, automatisch in eine Stellung kippbar, in der der hintere Teil des Gartiegels 7 höher liegt als der vordere Teil und somit in dem Gartiegel 7 befindliche Flüssigkeit, insbesondere verbliebene Garflüssigkeit, wie Bratfett oder -öl, oder Reinigungsflüssigkeit beim Reinigen des Gartiegels 7 durch einen Ausguss 70 aus dem Innern des Gartiegels 7 herausfließen kann. Die Drehachse des Drehlagers 11 kann insbesondere durch eine mit den beiden Trägerrohre 13 und 14 verbundene Schraube mit zugehöriger Mutter definiert sein.

Das Drehlager 15 umfasst ein an der Unterseite des Gartiegels 7 befestigtes Trägerblech 15'' mit zwei nach unten ragenden ösenartigen Fortsätzen mit jeweils einer kreisrunden Öffnung und einer Drehachse, die durch die beiden Öffnungen der Fortsätze des Trägerbleches 15'' geführt ist und an den beiden Enden jeweils an durch eine kreisrunde Öffnung eines Halteelements 15' der Trägereinrichtung 3 geführt ist sowie mittels eines Gegenstücks, beispielsweise einer Mutter, drehbar befestigt ist.

Die Trägereinrichtung 3 ist aus zwei Rohrmodulen 30 und 31 aufgebaut, die mittels zweier einander zugewandter Verbindungsrohre 32 und 33 an einer Rohrmuffe 34 zusammensteckbar sind und über die Schraubverbindung im Drehlager 11 sowie im Drehlager 15 miteinander verbunden werden. Die beiden korrespondierenden Rohrmodule 30 und 31 sind vorzugsweise wenigstens annähernd spiegelsymmetrisch zueinander ausgebildet. Jedes Rohrmodul 30 und 31 der Trägereinrichtung 3 weist in ein vertikal gerade nach oben verlaufendes und dann oben horizontal nach innen gebogenes Trägerrohr 35 bzw. 36 auf, an an dessen unteren Ende ein Aufstellfuß 17 im Rohrinnern gelagert ist. Von dem hinteren Trägerrohr 35 gehen nach vorne ein Seitenrohr 39 und ein zur Versteifung das Seitenrohr 39 unten mit dem Trägerrohr 35 verbindendes Verbindungsrohr 37 ab, die jeweils mit dem Trägerrohr 35 verbunden sind. Das Seitenrohr 39 weist an seinem nach unten gerichteten Ende ebenfalls einen Aufstellfuß 17 auf, der im Rohrinnern gelagert ist. Jeder Aufstellfuß 17 weist ein nach oben zeigendes Gewinde auf, das mit einem drehbaren Innengewinde eines im Rohrinnenraum untergebrachten Verstellzylinders 22 zur Höhenverstellung zusammenwirkt. Der Verstellzylinder 22 kann hierzu mit einem elektrischen Motor ausgestattet sein, der über im Rohrinnenraum verlegte elektrische Leitungen versorgt wird. Das Seitenrohr 39 ist zweimal gebogen und verläuft dazwischen gerade. An dem Seitenrohr 39 ist auch eine Lagerhalterung 15' für das Drehlager 15 befestigt. Die Biegestellen aller dargestellten Rohre sind mit 20 und die geraden Abschnitte mit 21 bezeichnet. In die Rohrmodule 30 und 31 sind jeweils elektrische Kabel 23 eingeführt zum Versorgen der elektrischen Komponenten mit elektrischer Energie und/oder zum Übertragen von Steuersignalen.

Der Deckel 6 für den Gartiegel 7 ist nun über Verbindungselemente 53 mit einem Deckelträger 5 verbunden. In der perspektivischen Draufsicht der FIG 10 ist eine Ausbildung des Deckelträgers 5 zu erkennen mit einem Trägerbügel 52, der mit beiden Enden an einem Drehrohr 51 befestigt ist und mehrere Verbindungselemente 53 aufweist, die beispielsweise mittels einer Schraubverbindung mit entsprechenden Aufnahmen 63 im Deckel 6 verbindbar sind.

Das Drehrohr 51 des Deckelträgers 5 ist an beiden Enden jeweils in einem Drehlager 8 bzw. 8' drehbar in den Trägerrohren 35 und 36 an deren oberen, nach innen gerichteten Enden gelagert. Dadurch ist der gesamte Deckel 6 um eine im wesentlichen horizontale Drehachse (nach oben) schwenkbar. Um das bei einer Drehung des Deckels 6 um die Drehachse aufgrund der Schwerkraft wirkende Drehmoment zu verringern und das Hochschwenken des Deckels 6 für eine Bedienperson zu erleichtern, ist an einem, beispielsweise dem von vorne gesehen an der linken Seite des Drehrohrs 51 angeordneten, Drehlager 8 eine Feder 80 mit entsprechenden Aufnahmeteilen 83 und 84 vorgesehen, die das effektive Gewicht des Deckels 6 durch ihre Federkraft verringert. Diese Feder 80 mit ihren Aufnahmeteilen 83 und 84 sowie zugehörigen Anschlagsmitteln 95 und 96 können nun insbesondere gemäß den FIG 1 bis 9 ausgebildet sein.

Das durch die Federkraft der Feder 80 in der nach oben gerichteten Drehrichtung ausgeübte Drehmoment nimmt vorzugsweise von der horizontalen Endposition (Ausgangsposition beim Winkel 0 Grad) des Drehlagers 8', bei der der Deckel 6 auf dem Gartiegel 7 aufliegt, zu einer oberen Endposition (beim Winkel 105 Grad) kontinuierlich ab. In der Ausgangsposition kann das Ausgangsdrehmoment Null sein oder einem voreingestellten Wert entsprechen. Dieser Wert des Ausgangsdrehmoments kann über die Einstellschraube 77 und die entsprechenden Gewinde 73 bis 76 eingestellt werden.

Die Feder 80 kompensiert somit einen Teil des Gewichts des Deckels 6, so dass sich dieser leichter anheben lässt, ist aber so schwach, dass der Deckel 6 in der Ausgangsposition auf dem Gartiegel 7 ruht. Die Feder 80 übt dabei praktisch ausschließlich ein Drehmoment über die Drehachse und nicht auf andere Teile des Garsystems aus, so dass keine Gegenmaßnahmen wie z.B. Versteifungen zum Auffangen der unerwünschten Reaktionskräfte (Gegenkräfte) mehr erforderlich sind.

Die Erfindung ist nicht auf die dargestellten Ausführungsbeispiele beschränkt, sondern kann auch in einer Vielzahl von abgewandelten Ausführungsformen verwirklicht werden. Beispielsweise kann für eine Drehbewegung auch nur ein Drehlager an einer Seite des drehbaren Teils vorgesehen sein. Ferner muß die Drehachse für die Drehbewegung nicht horizontal verlaufen, sondern kann auch gegen die Horizontale geneigt sein, insbesondere auch senkrecht dazu verlaufen. Außerdem kann die Feder 80 auch zur Dämpfung einer motorisch unterstützten Drehbewegung , bei der der Deckel 6 automatisch schwenkbar ist, vorgesehen sein.

Die Trägereinrichtung 3 ist in allen Ausführungsformen mit einer Rohrkonstruktion gebildet, die mehrere'einzelne, miteinander verbundenen oder verbindbare Rohrelemente oder Rohrmodule aufweist. Die Rohre bestehen vorzugsweise aus einem rostfreien (korrosionsfesten) Metall, insbesondere einem Edelstahl oder Aluminium oder einer Aluminiumlegierung. Die Rohre der Rohrkonstruktionen für die Trägereinrichtung 3 sind in allen Ausführungsformen vorzugsweise Rundrohre, also zylindrisch ausgebildet. Die dargestellten Komponenten der Drehvorrichtung können zumindest überwiegend als Drehteile einfach, kostengünstig und präzise hergestellt werden. Die Rundrohrkonstruktion der Trägereinrichtung 3 erlaubt somit auch eine besonders einfache Ausbildung der in ihr untergebrachten Komponenten der Drehvorrichtung.

Die Verwendung der Drehvorrichtung gemäß der Erfindung ist nicht auf Garsysteme beschränkt, sondern kann bei entsprechender Modifikation und Dimensionierung auch in anderen Anwendungen zum Einsatz kommen.

## Patentansprüche

1. Drehvorrichtung zum Drehen eines Drehkörpers (51,6) um eine Drehachse (A) mit
a) einer Trägereinrichtung (3) in der der Drehkörper drehbar gelagert ist,
b) wenigstens einer Feder (80), die an einem ersten Ende (82) mit dem Drehkörper gekoppelt ist und an einem zweiten Ende (81) mit der Trägereinrichtung gekoppelt ist und die bei einer Drehung der beiden Enden relativ zueinander in einer Drehrichtung um die Drehachse ein Drehmoment auf den Drehkörper ausübt.

2. Drehvorrichtung nach Anspruch 1, bei der das von der Feder ausgeübte Drehmoment entgegengesetzt zu einem von der auf den Drehkörper wirkenden Gravitationskraft bewirkten Drehmoment gerichtet ist.

3. Drehvorrichtung nach einem der vorhergehenden Ansprüche mit wenigstens einem an oder in der Trägereinrichtung vorgesehenen Drehlager (8,8') zum Lagern des Drehkörpers.

4. Drehvorrichtung nach Anspruch 3, bei der wenigstens ein Drehlager (8') eine Ausgangsposition und eine End-position aufweist, die vorzugsweise durch zusammenwirkende Anschlagsmittel (93, 94) definiert sind.

5. Drehvorrichtung nach Anspruch 4, bei der das Drehmoment der Feder von einem voreingestellten oder einstellbaren Ausgangsdrehmoment bei der Ausgangsposition des Drehlagers bis zur Endposition des Drehlagers betragsmäßig zunimmt.

6. Drehvorrichtung nach Anspruch 4 oder Anspruch 5, bei der die beiden Enden der Feder bezogen auf eine feste Position, insbesondere die Ausgangsposition, des Drehlagers in wenigstens zwei verschiedene Drehpositionen relativ zueinander einstellbar sind.

7. Drehvorrichtung nach Anspruch 2 in Kombination mit einem der Ansprüche 4 bis 6, bei der die Endposition des Drehlagers der, in Richtung der Gravitationskraft gesehen, tiefsten Position des Drehkörpers entspricht.

8. Drehvorrichtung nach einem der vorhergehenden Ansprüche mit einem an der Trägereinrichtung vorgesehenen ersten Aufnahmeteil (83) zum Aufnehmen des ersten Endes (81) der Feder und mit einem an dem Drehkörper vorgesehenen zweiten Aufnahmeteil (84) zum Aufnehmen des zweiten Endes (82) der Feder.

9. Drehvorrichtung nach Anspruch 8, bei der das erste Aufnahmeteil mit der Trägereinrichtung und das zweite Aufnahmeteil mit dem Drehkörper fest verbunden sind.

10. Drehvorrichtung nach Anspruch 8, bei der das erste Aufnahmeteil mit der Trägereinrichtung fest verbunden ist und das zweite Aufnahmeteil in dem Drehkörper in mehreren Drehpositionen um die Drehachse feststellbar gelagert ist.

11. Drehvorrichtung nach Anspruch 8, bei der das zweite Aufnahmeteil mit dem Drehkörper fest verbunden ist und das erste Aufnahmeteil in der Trägereinrichtung in mehreren Drehpositionen um die Drehachse feststellbar gelagert ist.

12. Drehvorrichtung nach Anspruch 10 oder Anspruch 11, bei der das feststellbare Aufnahmeteil (83 oder 84) eine Aufnahme (71,72) für das zugeordnete Ende (81,82) der Feder und mehrere in Umfangsrichtung um die Drehachse verteilt angeordnete Feststellmittel (73 bis 76) aufweist, mit denen ein Feststellelement (77) in Eingriff bringbar ist.

13. Drehvorrichtung nach Anspruch 12, bei der das feststellbare Aufnahmeteil (84) als Feststellmittel Gewinde (73 bis 76) aufweist und als Feststellelement eine korrespondierende Stellschraube (77) vorgesehen ist.

14. Drehvorrichtung nach Anspruch 12 oder Anspruch 13, bei der das feststellbare Aufnahmeteil (84) in dem Dreh-körper oder in der Trägereinrichtung um die Drehachse drehbar gelagert ist und bei mit einem der Feststellmittel in Eingriff gebrachtem Feststellelement an dem Drehkörper bzw. der Trägereinrichtung fixiert ist.

15. Drehvorrichtung nach einem der Ansprüche 10 bis 14, bei der das feststellbare Aufnahmeteil (84) einen Verstellbolzen (90) aufweist, über den das Aufnahmeteil (84) mit einem Werkzeug um die Drehachse verdrehbar ist.

16. Drehvorrichtung nach einem der Ansprüche 8 bis 15, bei der wenigstens eines der Aufnahmeteil (83) einen im Wesentlichen parallel zur Drehachse gerichteten Trägerbolzen (88) aufweist, auf dem die Feder (80) aufgesteckt ist.

17. Drehvorrichtung nach einem der auf Anspruch 3 rückbezogenen Ansprüche, bei dem das Drehlager ein in der Trägereinrichtung befestigtes, hohlzylindrisches erstes Drehlagerteil (86) und ein im Drehkörper (51) befestigtes, hohlzylindrisches zweites Drehlagerteil (87), das mit einer zylindrischen Mantelfläche auf einer zylindrischen Mantelfläche des ersten Drehlagerteils (86) gleitet, aufweist.

18. Drehvorrichtung nach Anspruch 17, bei der die Feder (80) durch den Innenraum der beiden Drehlagerteile (86,87) geführt ist.

19. Drehvorrichtung nach einem der vorhergehenden Ansprüche, bei dem wenigstens eine Feder als zylindrische Schraubenfeder ausgebildet ist.

20. Drehvorrichtung nach einem der vorhergehenden Ansprüche, bei dem wenigstens eine Feder als Spiralfeder ausgebildet ist.

21. Drehvorrichtung nach einem der vorhergehenden Ansprüche, bei dem wenigstens eine Feder als Torsionsfeder ausgebildet ist.

22. Drehvorrichtung nach einem der vorhergehenden Ansprüche, bei der eine Mittelachse der Feder im Wesentlichen mit der Drehachse des Drehlagers zusammenfällt.
